(19) Europäisches Patentamt

European Patent Office

Office européen des brevets

(11) **EP 1 510 278 A1**

(12) **EUROPÄISCHE PATENTANMELDUNG**

(43) Veröffentlichungstag:
02.03.2005 Patentblatt 2005/09

(51) Int Cl.7: **B23K 11/24**, B23K 11/00,
B23K 11/25

(21) Anmeldenummer: 03405627.5

(22) Anmeldetag: 01.09.2003

(84) Benannte Vertragsstaaten:
**AT BE BG CH CY CZ DE DK EE ES FI FR GB GR
HU IE IT LI LU MC NL PT RO SE SI SK TR**
Benannte Erstreckungsstaaten:
**AL LT LV MK**

(71) Anmelder: **H.A. SCHLATTER AG
CH-8952 Schlieren Zürich (CH)**

(72) Erfinder: **Widmer, Robert
5912 Hausen (CH)**

(74) Vertreter: **Roshardt, Werner Alfred, Dipl.-Phys.
Keller & Partner
Patentanwälte AG
Schmiedenplatz 5
Postfach
3000 Bern 7 (CH)**

(54) **Vielpunkt-Widerstandsschweissmaschine zum Schweissen von Drahtgittern**

(57) Bei einer Vielpunkt-Widerstandsschweissmaschine zum Schweissen von Drahtgittern mit mindestens zwei Elektrodenpaaren (11.1/12.1, 11.2/12.2, ...), mindestens zwei Schweissstromquellen (30.1, 30.2, ...) und einer Steuerung (71) zum Steuern der Schweissstromquellen (30.1, 30.2, ...) ist die Schaltanordnung der Schweissmaschine derart ausgebildet, dass die Schweisselektroden (11, 12) jeweils galvanisch voneinander getrennt sind. Jedes der Elektrodenpaare (11.1/12.1, 11.2/12.2, ...) wird von einer gesonderten Schweissstromquelle (30.1, 30.2, ...) versorgt. Die Steuerung (71) steuert die Schweissstromquellen (30.1, 30.2, ...) so, dass sie jeweils einen Schweissstrom liefern, der ein Wechselstrom ist, mit einer Frequenz von mehr als 50 Hz und höchstens 1000 Hz, bevorzugt 100-400 Hz. Die Steuerung (71) und die Schweissstromquellen (30.1, 30.2, ...) sind ausserdem so ausgebildet, dass ein Scheitelfaktor des Schweissstroms einstellbar ist. Schliesslich werden die Schweissstromquellen (30.1, 30.2, ...) von der Steuerung (71) synchron angesteuert. Die Schweissmaschine weist eine hohe Flexibilität auf und ermöglicht das Schweissen von engmaschigen Gittern bei hoher und gleichmässiger Schweissqualität ohne Brandstellen und mit minimaler Gitterdeformation.

Fig. 3

## Beschreibung

### Technisches Gebiet

Die Erfindung betrifft Vielpunkt-Widerstandsschweissmaschinen zum Schweissen von Drahtgittern mit mindestens zwei Elektrodenpaaren, mindestens zwei Schweissstromquellen und einer Steuerung zum Steuern der Schweissstromquellen. Die Erfindung betrifft ferner ein Verfahren zur Herstellung einer Schweissverbindung.

### Stand der Technik

Vielpunkt-Widerstandsschweissmaschinen der obengenannten Art sind bekannt. In solchen Maschinen können alle Kreuzungspunkte eines Querdrahtes mit den Längsdrähten gleichzeitig geschweisst werden. Dann wird das Gitter um eine Querdrahtteilung vorgeschoben und parallel dazu der nächste Querdraht eingeworfen. So können 100-150 Querdrähte pro Minute mit den Längsdrähten verschweisst werden.

Das Gitterschweissen stellt hohe Anforderungen an die Schweissmaschine. Beispielsweise darf eine durch den Schweissvorgang bewirkte Deformation des Gitters ein gewisses Mass nicht überschreiten, so dass das fertig geschweisste Gitter z. B. in einen präzise gefertigten Rahmen eingeschweisst werden kann. Die einzelnen Schweissverbindungen müssen zudem eine gute und gleichmässige Schweissqualität aufweisen und möglichst frei von Brandstellen sein. Bei engmaschigen Gittern, insbesondere aus dünnen Drähten mit einem Durchmesser von 3 mm oder weniger, sind diese Anforderungen besonders schwer zu erfüllen. Durch die grosse Anzahl von Schweisspunkten und die Flexibilität der dünnen Drähte ist die Gefahr von Deformationen besonders ausgeprägt. Die Bildung einer Schweissstelle erfolgt zudem aufgrund der geringen Einschweisstiefe sehr schnell, innerhalb einiger Millisekunden. Die Schweisszeit muss also präzise eingestellt werden können.

Beim Schweissen entsteht ein Grat entlang der Berührungsstellen der einzelnen Gitterdrähte. An diesen werden bei vielen Anwendungen ebenfalls Anforderungen gestellt. Der Grat sollte weder eine ausgequetschte Form haben, welche ein Überziehen des Gitters mit einem anderen Material erschwert oder verhindert, noch spitze Kanten aufweisen, welche ein Verletzungsrisiko darstellen. Schliesslich sollen beim Schweissvorgang Spritzer möglichst vermieden werden, denn diese bedeuten einen hohen Unterhaltsaufwand und können zu mechanischen oder elektrischen Problemen an der Schweissanlage führen.

Der Schweissprozess wird durch eine Vielzahl von Umständen und Parametern beeinflusst, unter anderem durch die mechanische Konstruktion der Schweissmaschine, deren Schaltungsanordnung, den verwendeten Schweissstrom, die Schweisszeit sowie die Elektrodenform und -kraft. Oft wird die Flexibilität einer Maschine auch durch deren mechanischen und schaltungstechnischen Aufbau reduziert, indem eine Änderung eines Parameters automatisch die Änderung eines anderen Parameters nach sich zieht, oder indem gewisse Parameter nur innerhalb enger Grenzen variierbar sind.

Netzgeführte Schweissmaschinen haben beispielsweise eine geringe Zeitauflösung, entsprechend der Netzfrequenz. Die Schweisszeit lässt sich zum Schweissen von Gittern aus dünnen Drähten nur in groben Schritten einstellen.

Die WO 98/21001 (EVG) beschreibt eine Vielpunkt-Widerstandsschweissmaschine, welche mit einem sinusförmigen periodisch wechselnden Schweissstrom hoher Leistungsdichte betrieben wird. Die Frequenz des Schweissstroms ist grösser als die Frequenz der Netzspannungsquelle. Bei einer ersten offenbarten Ausführung sind die Elektrodenpaare parallel geschaltet und werden gemeinsam durch mehrere Stromquellen mit dem Schweissstrom versorgt. Bei einer zweiten offenbarten Ausführung werden zwecks Reduktion der Strombelastung des Transformators Elektrodenpaare gruppenweise zusammengefasst, wobei jeder Gruppe je ein Zwischenkreiskondensator, ein separat ansteuerbarer Wechselrichter und ein Schweisstransformator zugeordnet ist.

Die Wahl einer höheren Schweissfrequenz erlaubt eine präzisere Einstellung der Schweisszeit. Auch bei dieser Schweissmaschine lässt sich aber ansonsten, wie bei anderen bekannten Gitterschweissmaschinen, nur eine kleine Zahl der Schweissparameter variieren. Die mangelnde Flexibilität führt dazu, dass sich die Schweissmaschine nicht optimal auf die herzustellende Schweissverbindung einstellen lässt.

### Darstellung der Erfindung

Aufgabe der Erfindung ist es, eine dem eingangs genannten technischen Gebiet zugehörende Schweissmaschine zu schaffen, welche eine höhere Flexibilität aufweist und eine verbesserte und gleichmässige Schweissqualität ermöglicht.

Die Lösung der Aufgabe ist durch die Merkmale des Anspruchs 1 definiert. Gemäss der Erfindung ist die Schaltanordnung der Schweissmaschine derart ausgebildet, dass die Schweisselektroden jeweils galvanisch voneinander getrennt sind. Jedes der Elektrodenpaare wird von einer gesonderten Schweissstromquelle versorgt. Die Steuerung steuert die Schweissstromquellen so, dass sie jeweils einen Schweissstrom liefern, der ein Wechselstrom ist, mit einer Frequenz von mehr als 50 Hz und höchstens 1000 Hz, bevorzugt 100-400 Hz. Die Steuerung und die Schweissstromquellen sind ausserdem so ausgebildet, dass ein Scheitelfaktor des Schweissstroms einstellbar ist. Die Schweissstromquellen werden von der Steuerung synchron angesteuert.

Durch die gesonderte Versorgung der Elektrodenpaare und durch deren galvanische Trennung wird eine gegenseitige Beeinflussung der einzelnen Schweisskreise minimiert. Benachbarte Schweisskreise sind lediglich noch über den Querdraht direkt verbunden. Nebeneinanderliegende Elektrodenpaare sind relativ zueinander potentialmässig floatend, so dass sich minimale Potentialdifferenzen und somit minimale Querströme ergeben. Die synchrone Ansteuerung der Schweissstromquellen, d. h. die gleichzeitige, phasengleiche Auslösung eines Schweisszyklus mit gleicher Stromform und gleicher Periode an allen Elektrodenpaaren, eliminiert weitgehend verbliebene Phasengrenzen zwischen benachbarten Stromquellen. Dadurch ist die bei gegebener Einschweisstiefe in das Gitter einzubringende Gesamtenergie reduziert. Es entstehen kaum Brandstellen und die Gitterdeformation ist verringert.

Die gesonderte Versorgung der Elektrodenpaare erlaubt einen Aufbau der Schweissmaschine mit kleinen Sekundärfenstern, so dass induktive Effekte minimiert werden. Dadurch lassen sich die Schweissströme der einzelnen Elektrodenpaare unabhängig voneinander und sehr präzise einstellen, so dass eine gleichmässige Schweissqualität und gleiche Einschweisstiefen über die gesamte Gitterbreite ermöglicht werden. Die gesonderten, in sich geschlossenen Stromversorgungen ermöglichen zudem einen modularen Aufbau der Schweissanlage. Je nach gewünschter Breite der Gitterebene kann eine entsprechende Anzahl von Modulen nebeneinander angeordnet werden.

Beim Schweissen mit einem Mittelfrequenz-Schweissstrom, also mit einer gegenüber der Netzfrequenz erhöhten Frequenz, ist die Periodendauer gegenüber dem netzgeführten Schweissen reduziert. Dadurch lässt sich die Schweisszeit in feineren Schritten einstellen. Dies ist besonders beim Schweissen von dünnen Drähten wichtig, wo mit kurzen Schweisszeiten gearbeitet wird. Ausserdem können bei höherer Frequenz kompaktere Transformatoren verwendet werden, welche weniger Raum beanspruchen und so eine engere Maschenteilung erlauben.

Gegenüber einer Mittelfrequenz-Gleichstromquelle werden bei einer Mittelfrequenz-Wechselstromquelle die sekundären Gleichrichter eingespart. Die üblicherweise zum Gleichrichten verwendeten Dioden arbeiten nur bis zu einer gewissen maximalen Leistung und begrenzen so die mögliche Leistung des Schweissstroms. Ausserdem weist jede Gleichrichterdiode eine Verlustleistung von einigen kW auf, welche eine Kühleinrichtung notwendig macht. Diese Nachteile werden bei einer Mittelfrequenz-Wechselstromquelle vermieden, ausserdem ergibt sich ein kostengünstigerer Aufbau.

Die für das Schweissverfahren wesentlichen Eigenschaften des verwendeten Schweissstroms hängen vor allem von dessen Spitzenwert und dessen Effektivwert ab. Hohe Stromspitzenwerte führen zu Brandstellen und zu einem starken Spritzen während des Schweissvorgangs. Niedrige Stromeffektivwerte führen zu einer schlechten Schweissqualität und bedingen eine lange Schweisszeit. Indem der Scheitelfaktor (crest factor), das Verhältnis zwischen Spitzenwert und Effektivwert, unabhängig von anderen Parametern einstellbar ist, kann die Schweissmaschine an das zu schweissende Gitter angepasst werden. Die erfindungsgemässe. Schaltanordnung ermöglicht dank den kleinen Sekundärfenstern schnelle Änderungen des Schweissstroms, so dass sich der Scheitelfaktor in einem weiten Bereich einstellen lässt.

Mit Vorteil sind die Schweissstromquellen und die Steuerung derart ausgebildet, dass der Schweissstrom einen trapezartigen Zeitverlauf hat, und dass der Scheitelfaktor durch Wählen einer Flankensteilheit und einer Amplitude des Schweissstroms einstellbar ist.

Ein trapezartiger Zeitverlauf lässt sich durch wenige Kennzahlen beschreiben, und ein entsprechender Strom lässt sich einfach erzeugen. Trotzdem kann der Scheitelfaktor des Stroms zwischen den Spezialfällen "Rechteck" (Scheitelfaktor nahe 1) und "Dreieck" (Scheitelfaktor nahe 2) durch Wahl der Flankensteilheit variiert werden. Trapezartig ist ein Zeitverlauf dann, wenn er einen ansteigenden Abschnitt, einen Mittelabschnitt (oder Impulsdach) und einen abfallenden Abschnitt umfasst, wobei die Steilheit des mittleren Abschnitts deutlich geringer ist als jene der ansteigenden und abfallenden Abschnitte. Der Schweissstrom muss im Mittelabschnitt nicht konstant sein, die Flanken müssen auch nicht genau linear ansteigen oder abfallen.

Alternativ können auch andere zeitliche Verläufe wählbar sein, z. B. ein sägezahnartiger oder ein Verlauf mit Höckern im Impulsdach.

Bevorzugt sind die Schweissstromquellen und die Steuerung so ausgebildet, dass die Flankensteilheit und die Amplitude des Schweissstroms sowie eine Elektrodenkraft derart einstellbar sind, dass

a) ein an der Schweissverbindung entstehender Grat regelmässig und perlenartig ausgebildet ist;

b) eine Verbindungsstelle einer hergestellten Schweissverbindung im Querschnitt zu 60-95%, bevorzugt 70-85%, verschweisst ist; und

c) ein Spritzen während des Schweissvorgangs minimiert wird.

Damit eine gute Schweissqualität erreicht wird, muss die Elektrodenkraft, abhängig von den zu verschweissenden Drähten, insbesondere dem Scheitelfaktor des verwendeten Schweissstroms angepasst werden. Beispielsweise wird zur Vermeidung von Spritzern beim Schweissvorgang ein geringer Stromspitzenwert gewählt. Damit die Schweisszeit nicht stark ansteigt, ist gleichzeitig ein niedriger Scheitelfaktor vorteilhaft. Damit nun bei einem derartig gewählten Schweissstrom eine gute Schweissqualität erreicht werden kann, muss die Elektrodenkraft tief gewählt werden. Die präzise Einstellbarkeit geringer Elektrodenkräfte an jedem Schweisspunkt stellt hohe Anforderungen an die Mechanik der Schweissmaschine.

Beim Gitterschweissen entsteht rund um die Fügezone, die Kontaktfläche zwischen dem Längs- und dem Querdraht nach erfolgter Schweissung, ein Grat. Unter bestimmten Schweissbedingungen ist dieser perlenartig ausgebildet, d. h. während des Schweissvorgangs zeitweise verflüssigtes Material hat sich in mehreren Anhäufungen rund um die Fügezone gesammelt. Ein regelmässiger perlenartiger Grat deutet auf eine gute Schweissqualität hin, bei welcher die Fügezone zu ca. 80% verschweisst ist. Ein regelmässiger perlenartiger Grat kann ausserdem nur dann entstehen, wenn ohne starkes Spritzen geschweisst wird.

Vorzugsweise sind die Schweissstromquellen und die Steuerung derart ausgebildet, dass durch Einstellen der Flankensteilheit und der Amplitude des Schweissstroms, einer Schweisszeit und/oder der Elektrodenkraft eine in das zu schweissende Drahtgitter eingebrachte Gesamtenergie bei vorgegebener Einschweisstiefe minimiert wird. So kann die Deformation des Drahtgitters, welche massgeblich von der eingebrachten Gesamtenergie abhängt, verringert werden. Gleichzeitig werden auch Brandstellen auf ein Minimum reduziert.

Mit Vorteil sind die Schweissstromquellen und die Steuerung so ausgebildet, dass der Scheitelfaktor sowie eine Schweisszeit t so gewählt werden können, dass die Beziehung

$$I\_eff^3 * t = \text{konst.}$$

bei einer gegebenen Einschweisstiefe im Wesentlichen erfüllt bleibt, wobei I_eff den Effektivwert des Schweissstroms bezeichnet. Bei gegebenem Scheitelfaktor wird die Elektrodenkraft so eingestellt, dass die Kopfzugbruchlast der hergestellten Schweissverbindung maximiert wird. Die Kopfzugbruchlast bezeichnet jene senkrecht zur Gitterebene auszuübende Kraft, welche erforderlich ist, um eine Schweissverbindung zu trennen. Die Kopfzugbruchlast hängt stark von der gewählten Elektrodenkraft ab und ist deshalb ein gutes Mass für die Schweissqualität. Demgegenüber hängt z. B. die Scherzugbruchlast, bei welcher die Kräfte in der Gitterebene wirken, nur schwach von der beim Schweissen eingesetzten Elektrodenkraft ab.

Bei gegebener Einschweisstiefe sollte die angegebene Beziehung, unabhängig von Änderungen anderer Schweissparameter, ungefähr erfüllt bleiben, wenn eine gleichbleibende Schweissqualität erreicht werden soll. Eine Änderung des Effektivwerts des Schweissstroms bedingt also auch eine Änderung der Schweisszeit. Zusätzliche unabhängig davon variierbare Parameter, wie z. B. die Elektrodenkraft oder der Scheitelfaktor, erlauben eine flexible Anpassung des Schweissverfahrens an den Durchmesser und das Material der zu schweissenden Drähte und an die gewählte Gitterteilung.

Vorzugsweise umfassen die Schweissstromquellen zur Erzeugung des Schweissstroms eine Wechselrichterschaltung, welche von der Steuerung durch ein pulsbreitenmoduliertes Signal angesteuert wird. Dadurch können sowohl die Frequenz als auch der Zeitverlauf des Schweissstroms flexibel eingestellt werden. Die freie Einstellbarkeit des Stromverlaufs mit Hilfe einer pulsbreitenmodulierten Wechselrichterschaltung ist in anderen technischen Anwendungen bekannt (vgl. z. B. DE 41 13 117 C1, Elpatronic).

Mit Vorteil sind die Schweissstromquellen und die Steuerung derart ausgebildet, dass ein Scheitelfaktor gewählt werden kann, welcher kleiner ist als 1.4. Ein exakt sinusförmiger Wechselstrom weist einen Scheitelfaktor von 1.41 auf. Je nach Aussteuerung und gewähltem Phasenanschnitt erhöht sich dieser Wert, so dass in der Praxis beim Wechselstromschweissen Scheitelfaktoren von 1.6-2.5 üblich sind. Ein zeitlicher Stromverlauf mit einem hohen Scheitelfaktor führt aber bereits bei mittleren Effektivströmen zu hohen Stromspitzenwerten und damit zum Spritzen während des Schweissvorgangs. Sollen hohe Stromspitzenwerte vermieden werden, muss bei vorgegebenem Scheitelfaktor der Effektivstrom verringert werden, was eine längere Schweisszeit bedingt und dadurch die Kapazität der Schweissmaschine vermindert. Dank dem einstellbaren Zeitverlauf des Schweissstroms und insbesondere dank den kleinen Sekundärfenstern der erfindungsgemässen Schaltanordnung kann nun der Scheitelfaktor unter den Wert von 1.4 gesenkt werden. Dadurch wird die Flexibilität der Schweissmaschine erhöht, und ein Schweissen ohne Spritzen oder mit stark reduziertem Spritzen ist möglich, ohne Einbussen in der Leistungsfähigkeit der Schweissmaschine.

Bei einem Verfahren zur Herstellung einer Schweissverbindung, insbesondere beim Schweissen von engmaschigen Drahtgittern, mittels einer Vielpunkt-Widerstandsschweissmaschine mit mindestens zwei Elektrodenpaaren, werden folgende Schritte ausgeführt:

a) Versorgen der Elektrodenpaare mit einem Schweissstrom mittels jeweils gesonderter Schweissstromquellen, wobei Schweisselektroden der Elektrodenpaare galvanisch voneinander getrennt sind;

b) Steuern der Schweissstromquellen derart, dass der Schweissstrom ein Wechselstrom ist mit einer Frequenz von mehr als 50 Hz, höchstens 1000 Hz, bevorzugt 100-400 Hz;

c) Erzeugen des Schweissstroms entsprechend einem einstellbaren Scheitelfaktor; und

d) für jede der Schweissstromquellen synchrones Auslösen von Schweisszyklen.

Aus der nachfolgenden Detailbeschreibung und der Gesamtheit der Patentansprüche ergeben sich weitere vorteilhafte Ausführungsformen und Merkmalskombinationen der Erfindung.

**Kurze Beschreibung der Zeichnungen**

Die zur Erläuterung des Ausführungsbeispiels verwendeten Zeichnungen zeigen:

Fig. 1      Eine schematische Darstellung einer erfindungsgemässen Vielpunkt-Widerstandsschweissmaschine;

Fig. 2      eine erste Variante der Eingangsgleichrichterschaltung der Schweissmaschine;

Fig. 3      eine zweite Variante der Eingangsgleichrichterschaltung der Schweissmaschine;

Fig. 4      eine detaillierte schematische Darstellung des Gleichrichters der Schweissmaschine;

Fig. 5      eine detaillierte schematische Darstellung der Wechselrichterschaltung der Schweissmaschine;

Fig. 6      ein pulsbreitenmoduliertes Signal zur Ansteuerung der Wechselrichterschaltung und den Zeitverlauf des entsprechend erzeugten Schweissstroms;

Fig. 7      eine detaillierte schematische Darstellung der Steuerung für die Schweissstromerzeugung;

Fig. 8A-D      schematische Darstellungen des Zeitverlaufs erfindungsgemäss erzeugter Schweissströme;

Fig. 9      eine schematische Darstellung einer erfindungsgemäss hergestellten Schweissverbindung im Querschnitt.

Grundsätzlich sind in den Figuren gleiche Teile mit gleichen Bezugszeichen versehen.

**Wege zur Ausführung der Erfindung**

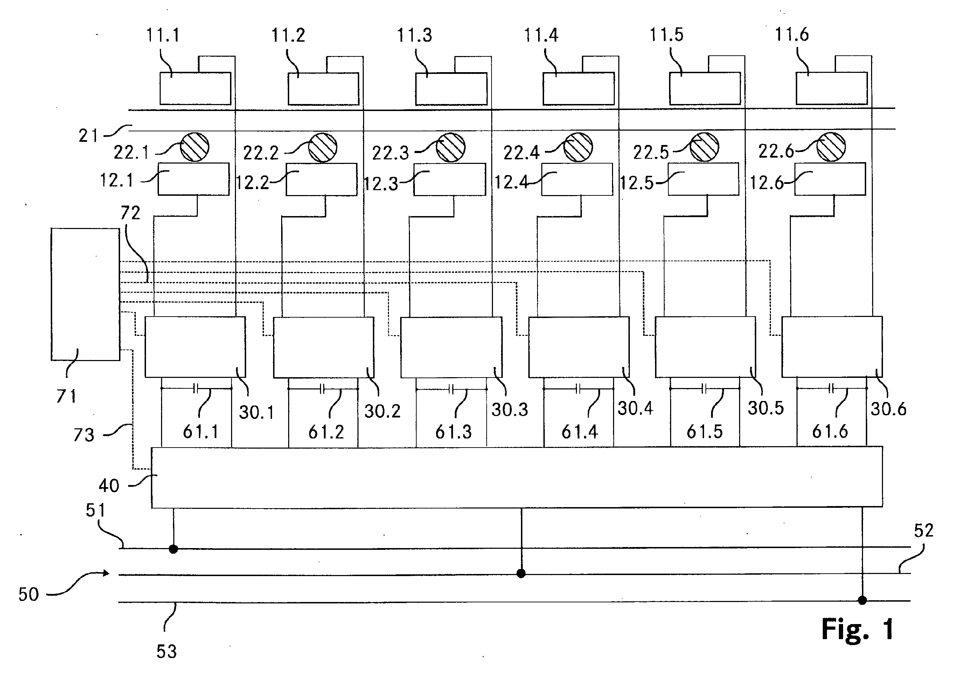

Die Figur 1 ist eine schematische Darstellung einer erfindungsgemässen Vielpunkt-Widerstandsschweissmaschine. Die auf einer Linie angeordneten Elektroden 11.1...11.6 wirken von oben auf den Querdraht 21, die jeweils zugeordneten Gegenelektroden 12.1...12.6 wirken von unten auf je einen der Längsdrähte 22.1...22.6. Zwischen den Elektrodenpaaren 11.1/12.1, 11.2/12.2...11.6/12.6, an den Kreuzungspunkten der Längsdrähte 22.1...22.6 mit dem Querdraht 21, befinden sich die Schweissstellen. Die Elektrodenpaare 11.1/12.1, 11.2/12.2, ... werden jeweils von separaten Stromquellen 30.1...30.6 mit dem Schweissstrom versorgt.

Der (nicht dargestellte) mechanische Aufbau der Schweissmaschine ist derart, dass die Gegenelektroden 12.1...12.6 beim Schweissvorgang gleichzeitig mit einer wählbaren Elektrodenkraft auf die Längsdrähte wirken. Bei dünnen Drähten mit einem Durchmesser von 3 mm oder weniger beträgt diese Kraft 250 N oder weniger, ist also in der Grössenordnung der Gewichtskraft der Elektroden oder sogar kleiner. Die Gegenelektroden 12.1...12.6 sind so gelagert, dass die Elektrodenkraft bei allen Schweisspunkten präzise eingestellt werden kann. Damit die Elektrodenkraft nach Einsetzen des eigentlichen Schweissvorgangs nicht abnimmt, müssen die Gegenelektroden 12.1...12.6 in an sich bekannter Weise nachgesetzt werden, um die aktuelle Einschweisstiefe zu kompensieren. Zum Nachsetzen werden insbesondere Federn eingesetzt.

Die Stromquellen 30.1...30.6 werden von einer Eingangsgleichrichterschaltung 40 gespeist, welche symmetrisch an ein dreiphasiges Netz 50 mit den Phasen 51, 52, 53 angeschlossen ist. Jeder der Stromquellen 30.1...30.6 ist primärseitig ein Zwischenkreiskondensator 61.1...61.6 zugeordnet.

Die Eingangsgleichrichterschaltung 40 wandelt die dreiphasige Netzspannung in eine Gleichspannung für die Speisung der Stromquellen 30.1...30.6 um. Durch die Zwischenkreiskondensatoren 61.1...61.6 wird die erzeugte Gleichspannung geglättet.

Eine Steuerung 71 ist mittels separater Datenleitungen 72 mit jeder Stromquelle 30.1...30.6 verbunden. Eine Datenleitung 73 führt zur Eingangsgleichrichterschaltung 40.

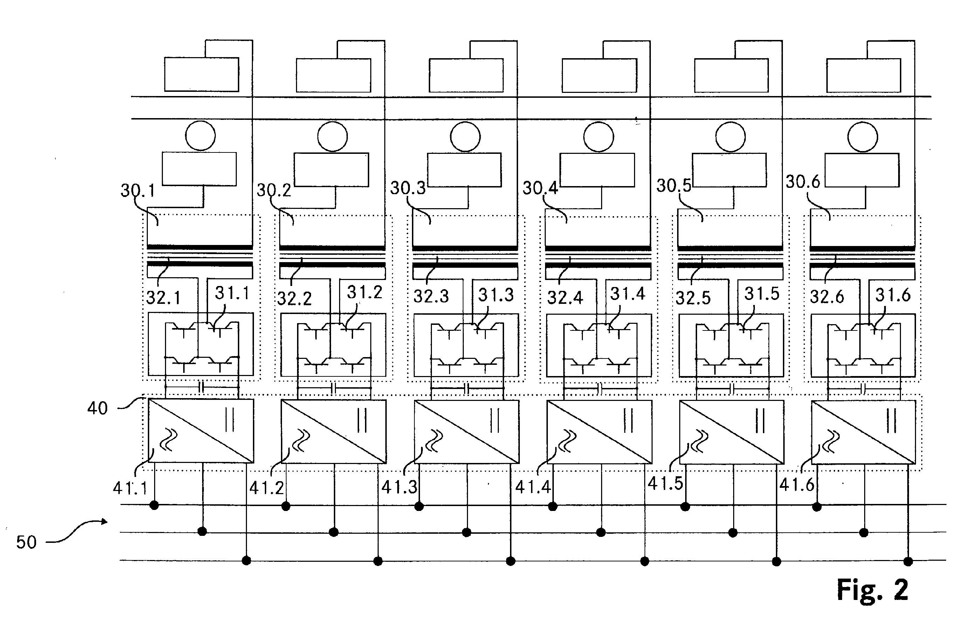

Die Figur 2 zeigt eine erste Variante der Eingangsgleichrichterschaltung der Schweissmaschine. Zugunsten einer besseren Übersichtlichkeit sind die Steuerung für die Eingangsgleichrichterschaltung und die Stromquellen sowie die dazugehörigen Datenleitungen nicht dargestellt. Jeder Stromquelle 30.1...30.6 ist ein separater Eingangsgleichrichter 41.1...41.6 mit einem gesonderten symmetrischen Netzanschluss an das dreiphasige Netz 50 zugeordnet. Dadurch wird eine maximale Unabhängigkeit der einzelnen Schweissstromkreise erreicht.

Jede Stromquelle 30.1...30.6 umfasst einen steuerbaren Wechselrichter 31.1...31.6 zur Erzeugung eines primären Schweissstroms mit der gewünschten Frequenz und dem gewünschten zeitlichen Stromverlauf sowie einen Schweisstransformator 32.1...32.6 zum Umspannen des primären Schweissstroms, so dass sich ein sekundärer Schweissstrom der gewünschten Stromstärke ergibt.

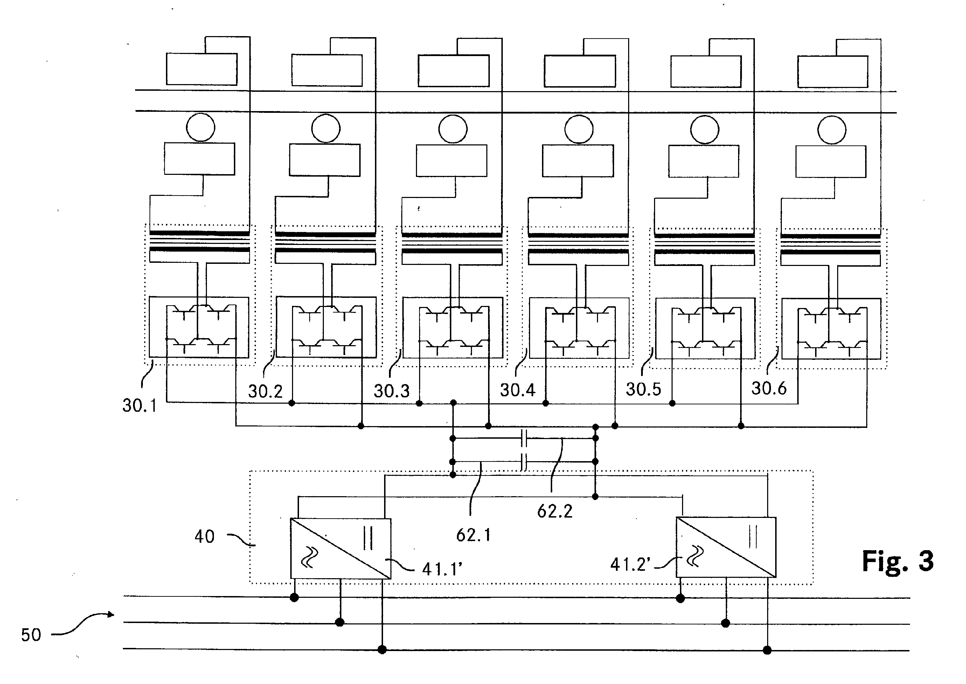

Die Figur 3 zeigt eine zweite Variante der Eingangsgleichrichterschaltung der Schweissmaschine. Wiederum sind die Steuerung für die Eingangsgleichrichterschaltung und die Stromquellen sowie die dazugehörigen Datenleitungen nicht dargestellt. Hier sind die primärseitigen Eingänge der Stromquellen 30.1... 30.6 parallel geschaltet und die Speisung erfolgt durch zwei Eingangsgleichrichter 41.1', 41.2' mit jeweils einem dreiphasigen Netzanschluss an das Netz 50. Die Glättung der erzeugten Gleichspannung erfolgt für alle Stromquellen 30.1...30.6 mittels zweier Zwischenkreiskondensatoren 62.1, 62.2, welche parallel zwischen die Eingangsgleichrichterschaltung 40 und die Stromquellen 30.1...30.6 geschaltet sind. Die Stromquellen 30.1... 30.6 sind gegenüber der in der Figur 2 dargestellten Schaltung unverändert.

Die Anzahl der eingesetzten Eingangsgleichrichter richtet sich primär nach der benötigten Stromstärke und hängt davon ab, welche Leistung die eingesetzten Gleichrichter verarbeiten können. Alternativ zu den oben dargestellten Varianten können Gruppen von Stromquellen gebildet werden, die jeweils von einem Gleichrichter gespeist werden und deren Eingänge jeweils parallel geschaltet sind. Die Zwischenkreiskondensatoren können wie dargestellt einzeln für jede Stromquelle, gemeinsam für alle Stromquellen oder aber ebenfalls gruppenweise vorgesehen werden.

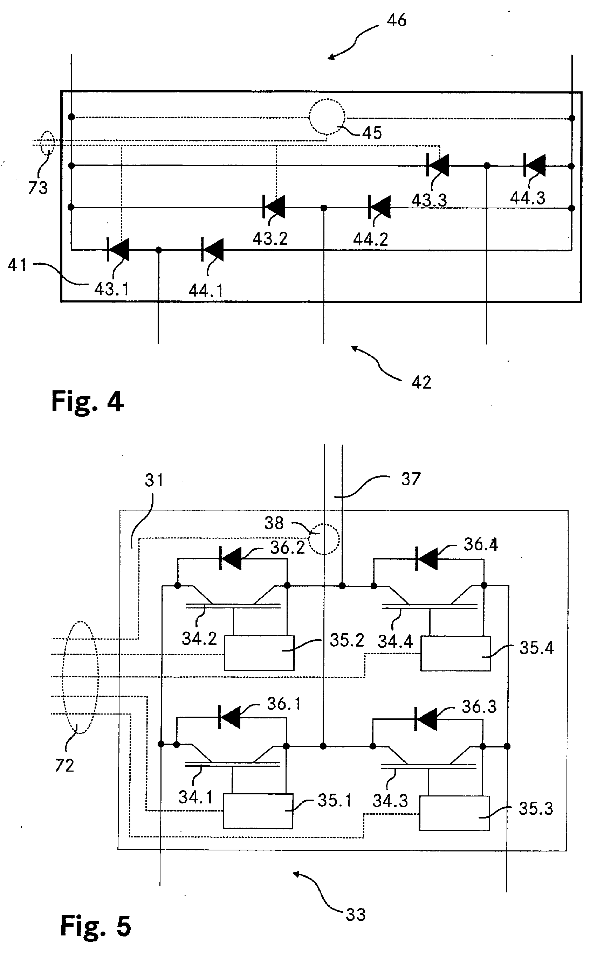

Die Figur 4 ist eine detaillierte schematische Darstellung eines Eingangsgleichrichters der Schweissmaschine. Der dargestellte Eingangsgleichrichter 41 weist einen dreiphasigen Netzanschluss 42 auf und ist in an sich bekannter Weise aufgebaut. Pro Phase sind jeweils ein Thyristor 43.1, 43.2, 43.3 sowie eine Gleichrichterdiode 44.1, 44.2, 44.3 vorgesehen.

Der gleichgerichtete Strom liegt am Ausgang 46 an. Eine Messeinrichtung 45 misst die Spannung des Ausgangsstroms und sendet die Messwerte über die Datenleitung 73 zur Steuerung 71. Die Thyristoren können über die Datenleitung 73 von der Steuerung 71 angesteuert werden, insbesondere in Abhängigkeit von der gemessenen Ausgangsspannung, welche der Spannung im Zwischenkreis entspricht.

Die Figur 5 ist eine detaillierte schematische Darstellung der Wechselrichterschaltung der Schweissmaschine. Der Wechselrichter 31 weist einen Eingang 33 für eine Gleichspannung auf. Das Wechselrichten erfolgt über eine an sich bekannte H-Brückenschaltung mit vier IGBT-Leistungstransistoren 34.1...34.4. Diese werden durch Treiberschaltungen 35.1...35.4 angesteuert. Antiparallel zu den IGBT-Leistungstransistoren 34.1...34.4 sind Freilaufdioden 36.1...36.4 geschaltet. Die Treiberschaltungen 35.1...35.4 können über eine Datenleitung 37 angesteuert und synchronisiert werden. Abhängig von den Steuersignalen werden Schweissströme unterschiedlicher Frequenz und mit unterschiedlichem Zeitverlauf erzeugt. Die Synchronisation führt dazu, dass die Schweisszyklen bei sämtlichen Elektrodenpaaren zeit- und phasengleich ausgelöst werden. Ausserdem wird überall dieselbe Stromform mit derselben Periode gewählt. Werden lauter gleichartige Längsdrähte mit dem Querdraht verschweisst, werden so Phasengrenzen praktisch eliminiert. Sollen Längsdrähte mit unterschiedlichem Durchmesser gleichzeitig mit dem Querdraht verschweisst werden, so wird bei dicken Drähten der Strom proportional verstärkt. Die in diesem Fall aufgrund der Amplitudenunterschiede verbleibenden Phasengrenzen sind minimal. Eine Messeinrichtung 38 misst periodisch die momentane Stromstärke des primären Schweissstroms und gibt die Messresultate über die Datenleitung 72 an die Steuerung 31 weiter. Der erzeugte primäre Schweissstrom liegt schliesslich am Ausgang 37 an.

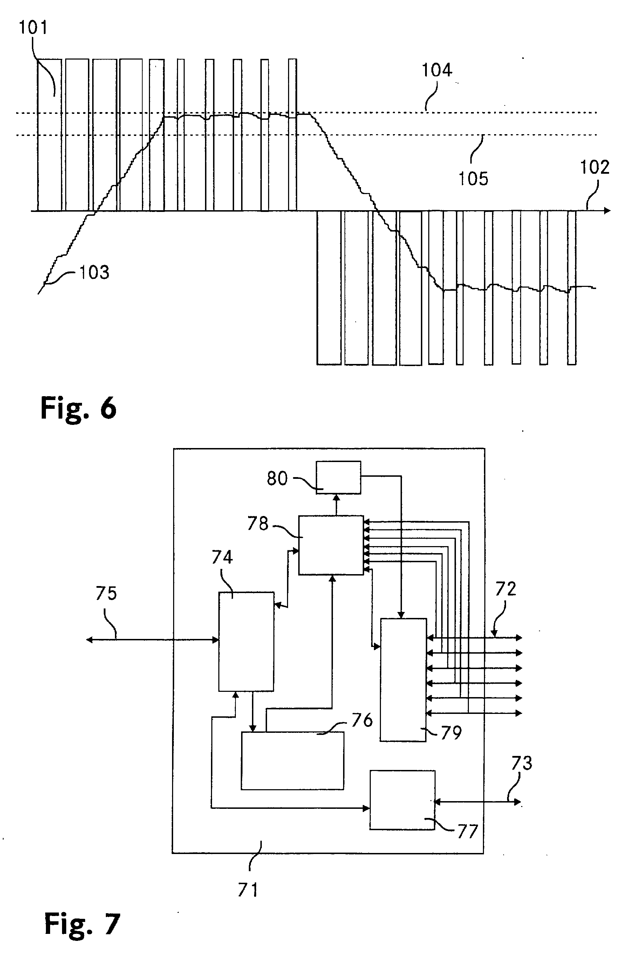

Die Figur 6 zeigt ein pulsbreitenmoduliertes Signal zur Ansteuerung der Wechselrichterschaltung und den Zeitverlauf des entsprechend erzeugten Schweissstroms. Das pulsbreitenmodulierte Signal 101 dient zur Ansteuerung der Treiberschaltungen 35.1... 35.4, welche die Aussteuerung der IGBT-Leistungstransistoren 34.1...34.4 bestimmen. Das entlang der Zeitachse 102 dargestellte Signal 101 umfasst eine Folge von Rechteckpulsen mit von Halbwelle zu Halbwelle wechselndem Vorzeichen. Die Frequenz der Rechteckpulse ist konstant, die Pulsbreite ist jeweils so gewählt, dass sich aufgrund der Induktivitäten im Schweissstromkreis ein sekundärer Schweissstrom 103 mit trapezartigem Zeitverlauf ergibt. Der Stromspitzenwert 104 entspricht dem maximalen Schweissstrom, im dargestellten Beispiel im Wesentlichen dem Impulsdach des zeitlichen Stromverlaufs. Der Effektivwert 105 ist aufgrund der endlichen Flankensteilheit etwas tiefer, es ergibt sich im dargestellten Beispiel ein Scheitelfaktor von ca. 1.3.

Die Pulsfrequenz des Signals 101 ist um ein Mehrfaches grösser als die Frequenz des erzeugten Schweissstroms 103, so dass der Stromverlauf geformt werden kann. Bei einer bevorzugten Schweissfrequenz von 200 Hz wird z. B. eine Pulsfrequenz von 4 kHz gewählt, so dass der zeitliche Stromverlauf durch die Einstellung von zehn Pulsbreiten pro Halbwelle präzise gesteuert werden kann.

Die Figur 7 ist eine detaillierte schematische Darstellung der Steuerung 71 für die Schweissstromerzeugung. Das Schweissprogramm und die Schweissparameter werden von der zentralen Steuereinheit (CPU) 74 über eine Datenleitung 75 von einem externen Eingabegerät, z. B. der Maschinensteuerung oder einem Personal Computer (PC) empfangen und in einen Speicher 76, z. B. einem Flash-EPROM, abgelegt. Das Schweissprogramm umfasst eine Tabelle mit Sollwerten für den primären und/oder sekundären Schweissstrom.

Die zentrale Steuereinheit 74 kontrolliert die Erzeugung des Zwischenkreis-Gleichstroms mittels einer Gleichrichtersteuerung 77, welche über die Datenleitung 73 mit der Eingangsgleichrichterschaltung 40 verbunden ist. Diese Gleichrichtersteuerung 77 wertet die Messungen der Zwischenkreisspannung aus, welche in den einzelnen Eingangsgleichrichtern 41 von der Messeinrichtung 45 periodisch durchgeführt werden. Abhängig von dieser Auswertung werden die Thyristoren 43 in den Eingangsgleichrichtern 41 über die Datenleitung 73 angesteuert.

Die zentrale Steuereinheit 74 kontrolliert im Weiteren eine Stromquellensteuerung 78 für die Stromquellen 30. Diese Stromquellensteuerung 78 steuert einen Signalgenerator 79, welcher die pulsbreitenmodulierten Signale 101 zur Ansteuerung der Wechselrichter 31 erzeugt. Dazu ist mit dem Signalgenerator 79 ein Oszillator 80 gekoppelt, dessen Oszillationsfrequenz von der Stromquellensteuerung 78 kontrolliert wird. Die Oszillationsfrequenz entspricht der Pulsfrequenz des Signals 101, welche im Allgemeinen ein Mehrfaches der Frequenz des Schweissstroms 103 ist. Die Stromquellensteuerung 78 wertet die periodischen Messwerte der primären Schweissströme aus, welche über die Datenleitung 72 von den Messeinrichtungen 38 der Wechselrichter 31 empfangen werden. Daraufhin erfolgt ein Vergleich der aktuellen Schweissströme mit den im Speicher 76 abgelegten Sollwerten. Basierend auf diesem Vergleich wird die Pulsbreite des nächsten Rechteckpulses des Signals 101 bestimmt. Dieser wird dann vom Signalgenerator 79 erzeugt und über die Datenleitung 72 den Wechselrichtern übermittelt.

Die Stromquellensteuerung 78 kontrolliert neben der Stromform auch die Phase der erzeugten Schweissströme und gleicht unerwünschte Phasenunterschiede aus. Der Signalgenerator 79 ist so gesteuert, dass er mit Hilfe des Oszillators 80 die Stromquellen 30 synchron ansteuert, so dass die Schweisszyklen synchron und phasengleich ausgelöst werden.

Anstelle des primären Schweissstroms kann auch der sekundäre Schweissstrom gemessen und die Pulsbreiten aufgrund dieser Messungen angepasst werden. Alternativ können die Pulsbreiten aus einer im Speicher 76 fest gespeicherten oder darin temporär abgelegten Tabelle-entnommen werden, welche für die aktuelle Schweissaufgabe vorgängig berechnet worden ist. In diesem Fall entfällt ein Feed-back von Informationen über den reell erhaltenen Schweissstrom.

Die Wahl der Stromform und der weiteren Parameter des Schweissstroms kann auf unterschiedliche Weise erfolgen. Das Schweissprogramm wird z. B. wie oben dargestellt von einem externen Steuergerät oder PC (Personal Computer) in die Steuerung 71 übertragen, bevor das Schweissen eines Gitters beginnt bzw. immer dann, wenn Parameter geändert werden sollen. Alternativ kann eine Mehrzahl unterschiedlicher Schweissprogramme im Speicher 76 der Steuerung 71 abgelegt sein, so dass der Benutzer lediglich noch eine Auswahl tätigen muss. Diese kann mittels direkt an der Steuerung 71 oder an einem gesonderten Steuergerät angeordneter Eingabemittel oder über den extern angeschlossenen PC erfolgen.

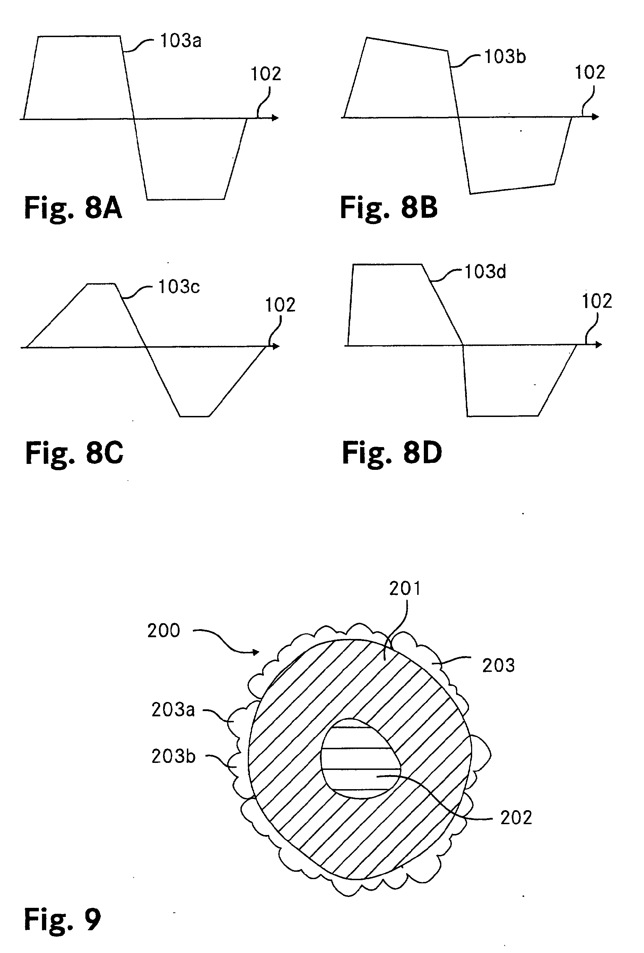

Die Figuren 8A-D sind schematische Darstellungen des Zeitverlaufs erfindungsgemäss erzeugter, trapezartiger Schweissströme. Die Figur 8A zeigt einen Schweissstrom 103a entlang der Zeitachse 102, bei welchem jede Halbwelle die Form eines symmetrischen Trapezes hat, d. h. die Flankensteilheit des Stromanstiegs entspricht im Wesentlichen der Flankensteilheit des Stromabfalls. Die maximale Flankensteilheit ist primär abhängig von der verwendeten Wechselrichterschaltung und der im Schweissstromkreis vorhandenen Induktivität. Der maximale Scheitelfaktor ergibt sich, wenn die maximale Flankensteilheit sowohl für den Stromanstieg als auch für den Stromabfall gewählt wird. Die erfindungsgemässe Schaltungsanordnung mit kleinen Sekundärfenstern und separaten Stromquellen für jedes Elektrodenpaar erlaubt grosse Flankensteilheiten, so dass ein Schweissstrom von annähernd Rechteckform mit einem Scheitelfaktor nahe 1 erzeugt werden kann.

Die Figur 8B zeigt einen Zeitverlauf mit abfallendem Impulsdach, d. h. die Stromstärke des Schweissstroms 103b nimmt im mittleren Abschnitt der Halbwelle jeweils leicht ab. Die Figur 8C zeigt einen Schweissstrom 103c, der annähernd eine Dreieckform besitzt. Die Flankensteilheit des Stromanstiegs als auch des Stromabfalls ist gering, so dass sich eine starke Reduktion der Länge des Impulsdachs ergibt. Ein Schweissstrom mit einem derartigen Zeitverlauf weist einen erhöhten Scheitelfaktor nahe 2 auf. Die Figur 8D schliesslich zeigt einen asymmetrischen trapezförmigen Zeitverlauf eines Schweissstroms 103d, bei welchem die Flankensteilheit des Stromanstiegs wesentlich grösser ist als diejenige des Stromabfalls.

Der Zeitverlauf des Schweissstroms wird je nach dem zu schweissenden Material und dem gewünschten Ergebnis gewählt. Primär wird ein Zeitverlauf mit dem gewünschten Scheitelfaktor ausgewählt. Durch Variation der Form des Schweissstroms ist eine Feinabstimmung möglich, indem die Aufheiz- und Abkühlvorgänge der Schweisspunkte präzise beeinflusst werden können.

Die erfindungsgemässe Vielpunkt-Widerstandsschweissmaschine kann modular aufgebaut sein. Entlang der Gitterbreite werden mehrere Module angeordnet, welche jeweils eine gewisse Anzahl Elektrodenpaare sowie die dazugehörigen Stromquellen umfassen. Bevorzugt umfasst jedes Modul auch eine gesonderte Eingangsgleichrichterschaltung mit symmetrischem dreiphasigem Netzanschluss. Die Steuerung der Eingangsgleichrichterschaltungen und der Wechselrichter erfolgt in jedem Fall zentral, z. B. über ein Bussystem. So kann gewährleistet werden, dass die Auslösung der Schweisszyklen bei sämtlichen Elektroden synchron erfolgt und dass die Eingangsgleichrichter so geregelt werden, dass die Netzbelastung möglichst gleichmässig ist. Die einzelnen Elektrodenpaare können (bevorzugt mitsamt der dazugehörigen Stromquelle) in Querrichtung verschiebbar angeordnet sein, so dass sich die Schweissmaschine auf verschiedene Gitterteilungen umrüsten lässt.

Besonders bei Längsdrähten mit kleinen Drahtdurchmessern und bei sehr engen Gitterteilungen können pro Elektrodenpaar u. U. zwei oder mehrere Schweisspunkte kontaktiert werden.

Die Figur 9 ist eine schematische Darstellung einer erfindungsgemäss hergestellten Schweissverbindung. Dargestellt ist ein Querschnitt durch die Fügezone 200, d. h. durch die verschweisste Kontaktstelle zwischen einem Längs- und einem Querdraht. Die Fügezone 200 umfasst zwei im Wesentlichen konzentrische Bereiche, wobei die Drähte im äusseren Bereich 201, ungefähr von der Form eines Kreisrings, miteinander verschweisst sind. Der zentrale Bereich 202 ist nicht verschweisst. Bezogen auf die Fläche sind ungefähr 80-85% der Fügezone 200 verschweisst, so dass die Schweissverbindung sehr stabil ist und hohe Bruchlasten aufweist. Wird die Schweissverbindung aufgebrochen, zeigt sich im verschweissten äusseren Bereich 201 ein kristalliner Bruch.

Während des Schweissvorgangs ist ein Grat 203 entstanden, welcher der Fügezone 200 entlang umläuft. Der Grat 203 ist nach erfolgter Schweissung von aussen sichtbar und deutet auf die Qualität der Schweissverbindung hin. Der dargestellte Grat 203 besteht aus einer Vielzahl von perlenartigen Anhäufungen (zwei Anhäufungen 203a, 203b sind in der Figur 8 bezeichnet). Er ist regelmässig ausgebildet, d. h. die perlenartigen Anhäufungen 203a, 203b weisen jeweils ungefähr dieselbe Form und Grösse auf, und der Grat 203 besitzt entlang der Fügezone 200 ungefähr eine konstante Breite. Ein derartiger Grat weist auf eine dauerhafte Schweissverbindung hoher Qualität hin. Mit Hilfe des Grats 203 lässt sich also die Schweissqualität auf einfache Weise, ohne Hilfsmittel beurteilen.

Zusammenfassend ist festzustellen, dass die Erfindung eine Vielpunkt-Widerstandsschweissmaschine zum Schweissen von Drahtgittern angibt, welche eine höhere Flexibilität aufweist und eine verbesserte und gleichmässige Schweissqualität ermöglicht.

**Patentansprüche**

1.  Vielpunkt-Widerstandsschweissmaschine zum Schweissen von Drahtgittern, insbesondere mit enger Maschenteilung, mit

    a) mindestens zwei Elektrodenpaaren (11.1/12.1, 11.2/12.2, ...);

    b) mindestens zwei Schweissstromquellen (30.1, 30.2, ...); und

    c) einer Steuerung (71) zum Steuern der Schweissstromquellen (30.1, 30.2, ...);

wobei

    d) eine Schaltanordnung der Schweissmaschine derart ausgebildet ist, dass Schweisselektroden (11, 12) unterschiedlicher Elektrodenpaare (11.1/12.1, 11.2/12.2, ...) jeweils galvanisch voneinander getrennt sind;

    e) jedes der Elektrodenpaare (11.1/12.1, 11.2/12.2, ...) von einer gesonderten Schweissstromquelle (30.1, 30.2, ...) versorgt wird;

    f) die Steuerung (71) und die Schweissstromquellen (30.1, 30.2, ...) derart ausgebildet sind, dass jede der Schweissstromquellen (30.1, . 30.2, ...) einen Schweissstrom (103) liefert, der ein Wechselstrom mit einer Frequenz von mehr als 50 Hz, höchstens 1000 Hz, bevorzugt 100-400 Hz, ist,

    g) die Steuerung (71) und die Schweissstromquellen (30.1, 30.2, ...) derart ausgebildet sind, dass ein Scheitelfaktor des Schweissstroms (103) einstellbar ist;

    h) die Steuerung (71) derart ausgebildet ist, dass die Schweissstromquellen (30.1, 30.2, ...) synchron angesteuert werden.

2.  Vielpunkt-Widerstandsschweissmaschine nach Anspruch 1, **dadurch gekennzeichnet, dass** die Schweissstromquellen (30.1, 30.2, ...) und die Steuerung (71) derart ausgebildet sind, dass der Schweissstrom (103) einen trapezartigen Zeitverlauf hat und dass der Scheitelfaktor durch Wählen einer Flankensteilheit und einer Amplitude des Schweissstroms einstellbar ist.

3.  Vielpunkt-Widerstandsschweissmaschine nach Anspruch 2, **dadurch gekennzeichnet, dass** die Schweissstromquellen (30.1, 30.2, ...) und die Steuerung (71) so ausgebildet sind, dass die Flankensteilheit und die Amplitude des Schweissstroms (103) sowie eine Elektrodenkraft derart einstellbar sind, dass

    a) ein an der Schweissverbindung entstehender Grat regelmässig und perlenartig ausgebildet ist;

    b) eine Verbindungsstelle einer hergestellten Schweissverbindung im Querschnitt zu 60-95 %, bevorzugt 70-85 %, verschweisst ist; und

    c) ein Spritzen während des Schweissvorgangs minimiert wird.

**4.** Vielpunkt-Widerstandsschweissmaschine nach Anspruch 3, **dadurch gekennzeichnet, dass** die Schweissstromquellen (30.1, 30.2, ...) und die Steuerung (71) derart ausgebildet sind, dass durch Einstellen der Flankensteilheit und der Amplitude des Schweissstroms (103), einer Schweisszeit und/oder der Elektrodenkraft eine in das zu schweissende Drahtgitter eingebrachte Gesamtenergie bei vorgegebener Einschweisstiefe minimiert und so eine Deformation des Drahtgitters verringert wird.

**5.** Vielpunkt-Widerstandsschweissmaschine nach einem der Ansprüche 1 bis 4, **dadurch gekennzeichnet, dass** die Schweissstromquellen (30.1, 30.2, ...) und die Steuerung (71) derart ausgebildet sind, dass der Scheitelfaktor sowie eine Schweisszeit t so wählbar sind, dass

$$I\_eff^3 * t = konst.$$

bei gegebener Einschweisstiefe im Wesentlichen erfüllt bleibt, wobei I_eff einen Effektivwert (105) des Schweissstroms (103) bezeichnet, und dass bei gegebenem Scheitelfaktor eine Elektrodenkraft derart einstellbar ist, dass eine Kopfzugbruchlast einer hergestellten Schweissverbindung maximiert wird.

**6.** Vielpunkt-Widerstandsschweissmaschine nach einem der Ansprüche 1 bis 5, **dadurch gekennzeichnet, dass** die Schweissstromquellen (30.1, 30.2, ...) eine Wechselrichterschaltung (31.1, 31.2, ...) zur Erzeugung des Schweissstroms (103) umfassen, welche von der Steuerung (71) durch ein pulsbreitenmoduliertes Signal (101) angesteuert wird.

**7.** Vielpunkt-Widerstandsschweissmaschine insbesondere nach einem der Ansprüche 1 bis 6, **dadurch gekennzeichnet, dass** die Schweissstromquellen (30.1, 30.2, ...) und die Steuerung (71) derart ausgebildet sind, dass ein Scheitelfaktor wählbar ist, welcher kleiner ist als 1.4.

**8.** Verfahren zur Herstellung einer Schweissverbindung, insbesondere beim Schweissen von engmaschigen Drahtgittern, mittels einer Vielpunkt-Widerstandsschweissmäschine mit mindestens zwei Elektrodenpaaren (11.1/12.1, 11.2/12.2, ...), welches folgende Schritte umfasst:

a) Versorgen der Elektrodenpaare (11.1/12.1, 11.2/12.2, ...) mit einem Schweissstrom mittels jeweils gesonderter Schweissstromquellen (30.1, 30.2, ...), wobei Schweisselektroden (11, 12) unterschiedlicher Elektrodenpaare (11.1/12.1, 11.2/12.2, ...) galvanisch voneinander getrennt sind;

b) Steuern der Schweissstromquellen derart, dass der Schweissstrom (103) ein Wechselstrom ist mit einer Frequenz von mehr als 50 Hz, höchstens 1000 Hz, bevorzugt 100-400 Hz;

c) Erzeugen des Schweissstroms (103) entsprechend einem einstellbaren Scheitelfaktor; und

d) für jede der Schweissstromquellen (30.1, 30.2, ...) synchrones Auslösen von Schweisszyklen.

**9.** Verfahren zur Herstellung einer Schweissverbindung nach Anspruch 8, **dadurch gekennzeichnet, dass** die Schweissstromquellen (30.1, 30.2, ...) derart gesteuert werden, dass der Schweissstrom (103) einen trapezartigen Zeitverlauf hat und dass der Scheitelfaktor durch Einstellen einer Flankensteilheit und einer Amplitude des trapezartigen Schweissstroms (103) erfolgt.

**10.** Verfahren nach Anspruch 8 oder 9, **dadurch gekennzeichnet, dass** zur Erzeugung des Schweissstroms (103) die Schweissstromquellen (30.1, 30.2, ...) mittels eines pulsbreitenmodulierten Signals (101) gesteuert werden.

**11.** Verfahren nach einem der Ansprüche 8 bis 10, **dadurch gekennzeichnet, dass** ein Scheitelfaktor eingestellt wird, der kleiner ist als 1.4.

**12.** Verfahren zur Herstellung einer Schweissverbindung, insbesondere nach einem der Ansprüche 8 bis 11, wobei Elektrodenpaare (11.1/12.1, 11.2/12.2, ...) mit einer Elektrodenkraft auf eine zu schweissende Verbindungsstelle gedrückt werden und während einer Schweisszeit ein Schweissstrom (103) durch die Verbindungsstelle geführt wird, wobei gleichzeitig

a) eine Stromform des Schweissstroms (103),

b) ein Effektivwert (105) des Schweissstroms (103),

c) die Schweisszeit und/oder

d) die Elektrodenkraft
derart gewählt werden, dass

e) ein an der Schweissverbindung entstehender Grat regelmässig und perlenartig ausgebildet ist;

f) die hergestellte Schweissverbindung an der Verbindungsstelle im Querschnitt zu 60-95 %, bevorzugt 70-85 %, verschweisst ist; und

g) ein Spritzen während des Schweissvorgangs minimiert wird.

13. Verfahren zur Herstellung einer Schweissverbindung nach Anspruch 12, **dadurch gekennzeichnet, dass** die Stromform des Schweissstroms (103) durch Einstellen eines Scheitelfaktors gewählt wird.

14. Verfahren zur Herstellung einer Schweissverbindung nach Anspruch 12 oder 13, **dadurch gekennzeichnet, dass** durch Variation der Stromform und des Effektivwerts (105) des Schweissstroms (103), der Schweisszeit und/oder der Elektrodenkraft eine in das herzustellende Drahtgitter eingebrachte Gesamtenergie bei vorgegebener Einschweisstiefe minimiert und so eine Deformation des Drahtgitters verringert wird.

15. Verfahren zur Herstellung einer Schweissverbindung nach einem der Ansprüche 12 bis 14, **dadurch gekennzeichnet, dass** für die herzustellende Schweissverbindung bei gegebener Einschweisstiefe der Effektivwert I_eff (105) des Schweissstroms (103) und die Schweisszeit t so variiert werden, dass im Wesentlichen

$$I\_eff^3 * t = konst.$$

erfüllt bleibt, und dass bei einem gegebenen Scheitelfaktor des Schweissstroms (103) die Elektrodenkraft derart gewählt wird, dass eine Kopfzugbruchlast der hergestellten Schweissverbindung maximiert wird.

Fig. 1

Fig. 2

30.1 30.2 30.3 30.4 30.5 30.6

32.1 31.1 32.2 31.2 32.3 31.3 32.4 31.4 32.5 31.5 32.6 31.6

40

41.1 41.2 41.3 41.4 41.5 41.6

50

EP 1 510 278 A1

12

Fig. 3

**Fig. 4**

**Fig. 5**

**Fig. 6**

**Fig. 7**

Fig. 8A

Fig. 8B

Fig. 8C

Fig. 8D

Fig. 9

**Europäisches Patentamt**

## EUROPÄISCHER RECHERCHENBERICHT

Nummer der Anmeldung

EP 03 40 5627

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | EP 0 597 214 A (SCHLATTER AG) 18. Mai 1994 (1994-05-18) | 1 | B23K11/24 B23K11/00 B23K11/25 |
| Y | * Spalte 4, Zeile 7-11 * * Abbildung 1 * --- | 2-15 | |
| Y | EP 0 688 626 A (TOKYO SHIBAURA ELECTRIC CO) 27. Dezember 1995 (1995-12-27) | 2-15 | |
| A | * Spalte 1, Zeile 57 - Spalte 2, Zeile 24 * * Spalte 5, Zeile 21-27 * * Spalte 6, Zeile 25-52 * * Spalte 14, Zeile 27-30 * * Spalte 23, Zeile 56 - Spalte 24, Zeile 12 * * Spalte 24, Zeile 18-23 * * Abbildungen 19,20 * --- | 1 | |
| A,D | DE 41 13 117 C (ELPATRONIC AG) 7. Mai 1992 (1992-05-07) * Spalte 4, Zeile 24-37; Abbildung 7 * --- | 1-15 | |
| A | US 4 595 326 A (MATSUNO KENJI ET AL) 17. Juni 1986 (1986-06-17) * Spalte 2, Zeile 5-64 * --- | 1-15 | **RECHERCHIERTE SACHGEBIETE** (Int.Cl.7) B23K |
| X,D | WO 98 21001 A (EVG ENTWICKLUNG VERWERT GES) 22. Mai 1998 (1998-05-22) * Seite 4, Zeile 18-25 * * Seite 6, Zeile 1-17 * ----- | 1 | |

Der vorliegende Recherchenbericht wurde für alle Patentansprüche erstellt

| Recherchenort | Abschlußdatum der Recherche | Prüfer |
|---|---|---|
| DEN HAAG | 11. Februar 2004 | Jaeger, H |

EPO FORM 1503 03.82 (P04C03)

**EP 1 510 278 A1**

**ANHANG ZUM EUROPÄISCHEN RECHERCHENBERICHT**
**ÜBER DIE EUROPÄISCHE PATENTANMELDUNG NR.**

EP 03 40 5627

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

11-02-2004

| Im Recherchenbericht angeführtes Patentdokument | | | Datum der Veröffentlichung | Mitglied(er) der Patentfamilie | | | Datum der Veröffentlichung |
|---|---|---|---|---|---|---|---|
| EP 0597214 | A | | 18-05-1994 | AT | 131094 | T | 15-12-1995 |
| | | | | CA | 2108089 | A1 | 12-05-1994 |
| | | | | DE | 59301103 | D1 | 18-01-1996 |
| | | | | EP | 0597214 | A1 | 18-05-1994 |
| | | | | ES | 2083239 | T3 | 01-04-1996 |
| | | | | JP | 6226460 | A | 16-08-1994 |
| | | | | US | 5416288 | A | 16-05-1995 |
| EP 0688626 | A | | 27-12-1995 | JP | 8010966 | A | 16-01-1996 |
| | | | | JP | 3190791 | B2 | 23-07-2001 |
| | | | | JP | 8098562 | A | 12-04-1996 |
| | | | | JP | 7314148 | A | 05-12-1995 |
| | | | | JP | 3253822 | B2 | 04-02-2002 |
| | | | | JP | 8308239 | A | 22-11-1996 |
| | | | | JP | 8290269 | A | 05-11-1996 |
| | | | | CN | 1119572 | A ,B | 03-04-1996 |
| | | | | DE | 69515083 | D1 | 23-03-2000 |
| | | | | DE | 69515083 | T2 | 12-10-2000 |
| | | | | EP | 0688626 | A1 | 27-12-1995 |
| | | | | KR | 186890 | B1 | 01-04-1999 |
| | | | | US | 5844193 | A | 01-12-1998 |
| | | | | US | 5965038 | A | 12-10-1999 |
| DE 4113117 | C | | 07-05-1992 | CH | 682889 | A5 | 15-12-1993 |
| | | | | AT | 128894 | T | 15-10-1995 |
| | | | | AU | 1134992 | A | 10-09-1992 |
| | | | | BR | 9200767 | A | 17-11-1992 |
| | | | | CA | 2062081 | A1 | 07-09-1992 |
| | | | | CN | 1071359 | A ,B | 28-04-1993 |
| | | | | DE | 4113117 | C1 | 07-05-1992 |
| | | | | DE | 59203931 | D1 | 16-11-1995 |
| | | | | EP | 0502478 | A2 | 09-09-1992 |
| | | | | HU | 60445 | A2 | 28-09-1992 |
| | | | | JP | 2524047 | B2 | 14-08-1996 |
| | | | | JP | 4333380 | A | 20-11-1992 |
| | | | | KR | 9601587 | B1 | 02-02-1996 |
| | | | | US | 5489757 | A | 06-02-1996 |
| US 4595326 | A | | 17-06-1986 | JP | 60056490 | A | 02-04-1985 |
| | | | | JP | 63024797 | B | 23-05-1988 |
| | | | | AU | 554748 | B2 | 04-09-1986 |
| | | | | AU | 3270584 | A | 14-03-1985 |
| | | | | EP | 0134724 | A1 | 20-03-1985 |
| | | | | KR | 8902769 | B1 | 28-07-1989 |
| WO 9821001 | A | | 22-05-1998 | AT | 409355 | B | 25-07-2002 |

Für nähere Einzelheiten zu diesem Anhang : siehe Amtsblatt des Europäischen Patentamts, Nr.12/82

18

**ANHANG ZUM EUROPÄISCHEN RECHERCHENBERICHT
ÜBER DIE EUROPÄISCHE PATENTANMELDUNG NR.**

EP 03 40 5627

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

11-02-2004

| Im Recherchenbericht angeführtes Patentdokument | Datum der Veröffentlichung | Mitglied(er) der Patentfamilie | | Datum der Veröffentlichung |
|---|---|---|---|---|
| WO 9821001         A |  | AT | 196196 A | 15-12-2001 |
|  |  | WO | 9821001 A1 | 22-05-1998 |
|  |  | AT | 235343 T | 15-04-2003 |
|  |  | DE | 59709644 D1 | 30-04-2003 |
|  |  | EP | 0936956 A1 | 25-08-1999 |
|  |  | ZA | 9709879 A | 25-05-1998 |

EPO FORM P0461

Für nähere Einzelheiten zu diesem Anhang : siehe Amtsblatt des Europäischen Patentamts, Nr.12/82